(19) Europäisches Patentamt / European Patent Office / Office européen des brevets

(11) **EP 3 844 582 B1**

(12) **EUROPÄISCHE PATENTSCHRIFT**

(45) Veröffentlichungstag und Bekanntmachung des Hinweises auf die Patenterteilung:
**19.06.2024   Patentblatt 2024/25**

(21) Anmeldenummer: **19748792.9**

(22) Anmeldetag: **30.07.2019**

(51) Internationale Patentklassifikation (IPC):
**G05B 23/02** *(2006.01)*        **G01N 17/00** *(2006.01)*

(52) Gemeinsame Patentklassifikation (CPC):
**G05B 23/0235; G05B 23/0272;** G05B 2219/24077;
G05B 2219/2609; Y02P 90/80

(86) Internationale Anmeldenummer:
**PCT/EP2019/070460**

(87) Internationale Veröffentlichungsnummer:
**WO 2020/043413 (05.03.2020 Gazette 2020/10)**

(54) **VERFAHREN ZUM ÜBERWACHEN EINER MESSSTELLE IN EINER ANLAGE DER PROZESSAUTOMATISIERUNG**

METHOD FOR MONITORING A MEASUREMENT POINT IN A PROCESS AUTOMATION SYSTEM

PROCÉDÉ DE SURVEILLANCE D'UNE STATION DE MESURE DANS UNE INSTALLATION D'AUTOMATISATION DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2018   DE 102018120839**

(43) Veröffentlichungstag der Anmeldung:
**07.07.2021   Patentblatt 2021/27**

(73) Patentinhaber: **Endress+Hauser Process Solutions AG**
**4153 Reinach (CH)**

(72) Erfinder:
• **THOREN, Werner**
  **79585 Steinen (DE)**
• **KÖLBLIN, Robert**
  **79539 Lörrach (DE)**
• **ISLER, Christian**
  **4242 Laufen (CH)**
• **HUBER, Hans-Jürgen**
  **79100 Freiburg (DE)**

(74) Vertreter: **Trenkle, Dennis**
**Endress + Hauser Group Services (Deutschland) AG+Co. KG**
**Colmarer Straße 6**
**79576 Weil am Rhein (DE)**

(56) Entgegenhaltungen:
**EP-A1- 0 727 656           WO-A2-2007/038533**
**US-A1- 2009 319 084      US-A1- 2014 212 978**

**Beschreibung**

Die Erfindung betrifft ein Verfahren zum Überwachen einer Messstelle in einer Anlage der Automatisierungstechnik, wobei die Messstelle zumindest an einer Anlagenkomponente, insbesondere ein Behälter und/oder eine Rohrleitung, in welcher sich ein Prozessmedium zumindest zeitweise befindet, angebracht ist, welche Anlagenkomponente in einen verfahrenstechnischen Prozess eingebunden ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an die Leitstelle der Anlage weiterleiten. Die Leitstelle dient zur Prozessvisualisierung, Prozessüberwachung und Prozesssteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Im Zuge der Industrie 4.0, bzw. IIoT ("Industrial Internet of Things") werden die von den Feldgeräten erzeugten Daten auch häufig direkt aus dem Feld mithilfe sogenannter Datenumsetzungseinheiten, welche beispielsweise als "Edge Devices" oder "Cloud Gateways" bezeichnet werden, erhoben und automatisiert an eine zentrale cloudfähige Serviceplattform übermittelt, auf welcher sich eine Applikation befindet. Auf diese Applikation, welche unter anderem Funktionen zur Visualisierung und weiteren Bearbeitung der auf der Datenbank gespeicherten Daten bietet, kann von einem Benutzer mittels Internet zugegriffen werden.

Ein Ausfall, bzw. Defekt, eines Feldgeräts, bzw. einer anderen Anlagenkomponente, beispielsweise eines Behälters oder einer Rohrverbindung, verursacht mitunter einen hohen Zeit- und Kostenaufwand. Mitunter muss der aktuelle Prozess unterbrochen werden und das betroffene Feldgerät, bzw. die betroffene Anlagenkomponente, ausgetauscht oder gewartet werden.

Moderne Feldgeräte, welche über einen Feldbus kommunizieren, liefern Informationen über deren aktuellen Gerätestatus. Im Falle eines Fehlers wird beispielsweise eine Fehlermeldung generiert, welche das Servicepersonal über den aufgetretenen Fehler informiert. Diese Funktion ist jedoch in älteren Feldgeräten, welche noch über analoge Kommunikationswege kommunizieren, insbesondere über eine 4-20 mA-Stromschleife, nicht verfügbar. Außerdem wird diese Funktion bei einem bereits aufgetretenen Fehlerfall generiert. Ein Informieren über einen bevorstehenden Fehlerfall, so dass eine eventuell vorausschauende Wartung erfolgen kann, ist nicht vorgesehen.

Die US 2014/212978 A1, die EP 0 727 656 A1, die US 2009/319084 A1 und die WO 2007/038533 A2 offenbaren Verfahren, in welchen Korrosionsgrade von Anlagenkomponenten berechnet und/oder vorhergesagt werden.

Ausgehend von dieser Problematik liegt der Erfindung die Aufgabe zugrunde, ein Verfahren vorzustellen, welches es erlaubt, einen Fehlerfall an einem Feldgerät oder an einer weiteren Anlagenkomponente im Vorfeld vor Auftreten des Fehlers auf zuverlässige Art und Weise festzustellen.

Die Aufgabe wird durch ein Verfahren gemäß Patentanspruch 1 gelöst.

Der Vorteil des erfindungsgemäßen Verfahrens besteht darin, dass Ausfälle von Feldgeräten und/oder weiteren Anlagenkomponenten, wie beispielsweise Behälter, Rohrleitungen, etc., auf zuverlässige Art und Weise vorhergesagt werden kann. Grundidee des Verfahrens ist, dass für jedes der Feldgeräte, bzw. der weiteren Anlagenkomponenten, der aktuelle Grad der Belastung berechnet wird. Der Grad der Belastung definiert, wie sehr ein solches Feldgerät, bzw. eine solche Anlagenkomponente im Laufe des Betriebs beansprucht wird, beispielsweise mechanisch, und nach einer gewissen Zeit aufgrund der Beanspruchung zu einem Fehler neigen kann.

Für die Berechnung des individuellen Grads der Belastung werden Produktionsdaten herangezogen. Diese werden beispielsweise im Leitsystem der Anlage, auf einem externen System erfasst. Die Produktionsdaten enthalten die Menge der Produkte, die pro Zeiteinheit, beispielsweise pro Tag, von der Anlage produziert worden sind. Aus diesen Produktionsdaten werden Belastungsdaten berechnet. Die Belastungsdaten definieren den jeweiligen Zuwachs des Grads der Belastung für jedes der Feldgeräte, bzw. für jede der weiteren Anlagenkomponenten, pro erzeugtem Produkt. In die Berechnung fließt der jeweilige Typ des Feldgeräts, bzw. der Anlagenkomponente, bzw. der Typ des Produkts und die jeweiligen Herstellungsschritte, bzw. Applikationen mit ein. Beinhaltet die Herstellung eines Produkts beispielsweise das Verwenden eines aggressiven Prozessmediums, so ist der Grad der Belastung für eine Rohrleitung unter Umständen höher als bei einer Applikation, bei welcher beispielsweise Wasser als Prozessmedium die Rohrleitung durchfließt.

Der Grad der Belastung wird für jedes Feldgerät, bzw. für jede der weiteren Anlagenkomponenten, individuell berechnet. Hierbei wird die Grad der Belastung für ein Feldgerät, bzw. eine weitere Anlagenkomponente, wie folgt berechnet:

$$GB_n = \sum_{i=1}^{m} B_{i,n}$$

GB entspricht dabei dem Grad der Belastung für ein Feldgerät, bzw. eine Anlagenkomponente" n". B entspricht der Belastung, welche in einem Zeitintervall i (definiert durch die Aktualisierung der Produktionsdaten) angefallen ist. "m" entspricht dem Zeitraum, in welchem die Berechnung durchgeführt wurde, bzw. die Anzahl der Zeitintervalle.

Erreicht der Grad der Belastung eines der Feldgeräte, bzw. einer der weiteren Anlagenkomponenten, eine jeweils vorbestimmte Schwelle, so wird eine Wartungsnotifikation erstellt, welche dem Servicepersonal zugestellt wird, um das jeweilige Feldgerät, bzw. die jeweilige weitere Anlagenkomponente dementsprechend zu prüfen und gegebenenfalls zu warten und/oder auszutauschen.

Feldgeräte, welche im Zusammenhang mit dem erfindungsgemäßen Verfahren genannt werden, sind bereits im einleitenden Teil der Beschreibung beispielhaft beschrieben worden.

Gemäß einer vorteilhaften Weiterbildung des erfindungsgemäßen Verfahrens ist vorgesehen, dass zusätzlich Umweltdaten erfasst werden, insbesondere Wetterdaten, welche in die Berechnung der Belastungsdaten, bzw. in das Aufsummieren des Grads der Belastung für jede der Anlagenkomponenten und für jedes der Feldgeräte miteinfließen. Neben Wetterdaten ist auch ein Verwenden folgend weiterer Umweltdaten, wie beispielsweise Konzentrationen von Luftschadstoffen, Pegelstände, Wassertemperaturen, etc., möglich. Diese weiteren Daten bilden einen Faktor, der für das kontinuierliche Aufsummieren des Grads der Belastung im jeweiligen Zeitintervall verwendet wird. Der Faktor kann beispielsweise für hohe und niedrige Temperaturen höher ausfallen, als dieser für moderate Temperaturen ausfallen würde. Hierbei wird die Grad der Belastung für ein Feldgerät, bzw. eine weitere Anlagenkomponente, wie folgt berechnet:

$$GB_n = \sum_{i=1}^{m} a_{i,n} \cdot B_{i,n}$$

"a" entspricht hierbei dem jeweiligen Faktor während eines Zeitintervalls, wobei die Umweltdaten zu den jeweiligen Zeitintervallen i korreliert werden.

Gemäß einer ersten vorteilhaften Variante des erfindungsgemäßen Verfahrens ist vorgesehen, dass die Schwellen für jede der Anlagenkomponenten und für jedes der Feldgeräte bei der Inbetriebnahme der jeweiligen Anlagenkomponente, bzw. des jeweiligen Feldgeräts, bestimmt werden. Dies wird insbesondere manuell vorgenommen. Die jeweilige Schwelle ist insbesondere für verschiedene Feldgerätetypen, bzw. Typen von weiteren Anlagenkomponenten, verschieden und unterscheidet sich je nach für das Feldgerät, bzw. die weitere Anlagenkomponente, vorgesehene Applikation.

Gemäß einer zweiten vorteilhaften Variante des erfindungsgemäßen Verfahrens ist vorgesehen, dass die Schwellen für jede der Anlagenkomponenten und für jedes der Feldgeräte durch einen Vergleich mit Anlagenkomponenten, bzw. Feldgeräten, in weiteren Anlagen ähnlichen Typs bestimmt werden. Auf diese Art und Weise kann auf die Erfahrung weiterer Anlagen, welche ähnliche Applikationen für Feldgeräte, bzw. weitere Anlagenkomponenten, aufweisen, zugegriffen werden.

In einer bevorzugten Ausgestaltung der zweiten Variante des erfindungsgemäßen Verfahrens ist vorgesehen, dass die Schwellen kontinuierlich neu berechnet, bzw. aktualisiert werden. Die jeweils eingestellte Schwelle entspricht so dem jeweiligen Erfahrungsschatz. Auch können eventuelle notwendige Korrekturen schnell für alle Anlagen verfügbar gemacht werden, bzw. die Schwellen der in diesen Anlagen eingesetzten Feldgeräte, bzw. weiteren Anlagenkomponenten aktualisiert werden.

Gemäß einer vorteilhaften Ausgestaltung des erfindungsgemäßen Verfahrens ist vorgesehen, dass das Erfassen der Produktionsdaten, das Berechnen der Belastungsdaten, das Aufsummieren des jeweiligen Grads der Belastung, das Erstellen der Wartungsnotifikation und/oder das Bestimmen, bzw. neu berechnen, bzw. Aktualisieren, der Schwellen von einem Server, insbesondere von einer Anwendungsapplikation auf dem Server durchgeführt wird, welcher Server mit dem Kommunikationsnetzwerk der Anlage, insbesondere über das Internet, in Kommunikationsverbindung steht. Dem Server werden hierfür die Produktionsdaten, beispielsweise von der Leitstelle der Anlage, zur Verfügung gestellt.

Die Erfindung wird anhand der nachfolgenden Figur näher erläutert. Es zeigt

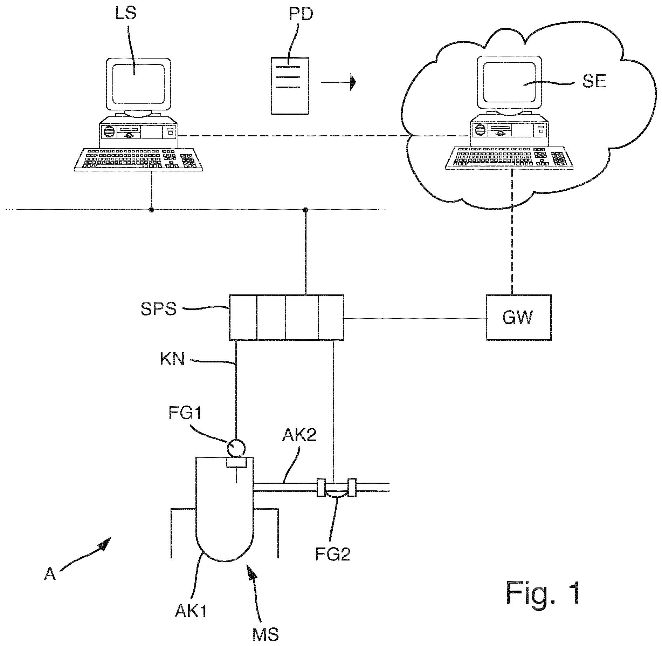

Fig. 1: ein Ausführungsbeispiel des erfindungsgemäßen Verfahrens.

In Fig. 1 ist eine Messstelle MS einer Anlage der Prozessautomatisierung abgebildet. Diese besteht aus Anlagenkomponenten in Form eines Tanks AK1 und einer von dem Tank AK1 abführenden Rohrleitung AK2. Zur Messung des Füllstands des Tanks AK1 weist die Messstelle ein Feldgerät FG1, beispielsweise eine Füllstandmessgerät mittels Radar, welches am Tank AK angebracht ist, auf. Zur Messung der Durchflussgeschwindigkeit des die Rohrleitung AK2 durchströmenden Prozessmediums umfasst die Messstelle MS ein Feldgerät FG2, beispielsweise ein Durchflussmessgerät nach dem Coriolisprinzip, welches an der Rohrleitung AK2 angebracht ist.

Jedes der Feldgeräte FG1, FG2 befindet sich mittels einer 4-20mA-Stromschleife oder alternativ einem Feldbus in Kommunikationsverbindung mit einer übergeordneten Einheit SPS, welche Messwerte der Feldgeräte FG1, FG2 abfragt und diese mittels eines weiteren Netzwerksegments an die Leitstelle LS der Anlage überträgt. Die Gesamtheit aller Netzwerksegmente (die 4-20mA-Stromschleifen, bzw. der Feldbus, und das weitere Netzwerksegment) werden im Folgenden als Kommunikationsnetzwerk KN bezeichnet.

Die übergeordnete Einheit ist mit einem Gateway GW verbunden, welches die von den Feldgeräten F1, F2 an die übergeordnete Einheit SPS übermittelten Prozesswerte mithört und über das Internet einem Server SE zur Verfügung stellt. Die Serviceplattform ist dazu ausgestaltet, Applikationen auszuführen. Beispielsweise handelt es sich bei einer solchen Applikation um ein Plant Asset Management-System, welches dem Verwalten der Assets, also dem Inventarbestand, der Anlage A dient.

Im Folgenden ist das erfindungsgemäße Verfahren zur vorausschauenden Fehlerdetektion eines Feldgeräts FG1, FG2, bzw. einer weiteren Anlagenkomponente AK1, AK2 beschrieben:

Die gezeigte Messstelle MS befindet sich in einem Teilbereich eines verfahrenstechnischen Prozesses. In diesem Teilbereich des verfahrenstechnischen Prozesses wird zumindest ein Produkt aus zumindest einem Edukt erzeugt. Die Gesamtmenge an erzeugtem Produkt wird in definierten Zeitintervallen, beispielsweise täglich oder stündlich, erfasst und als Produktionsdaten PD in der Leitstelle LS gespeichert. Sobald neue Produktionsdaten PD verfügbar sind, werden diese von der Leitstelle LS an den Server SE übertragen.

Der Server SE berechnet anschließend für jedes der Feldgeräte FG1, FG1, bzw. für jede der weiteren Anlagenkomponenten AK1, AK2 einen individuellen Grad der Belastung, welche der individuellen Beanspruchung, bzw. dem Verschleiß entspricht. Die Belastungsdaten definieren den jeweiligen Zuwachs des Grads der Belastung pro Feldgerät FG1, FG2, bzw. der weiteren Anlagenkomponenten AK1, AK2, pro erzeugtem Produkt.

Zusätzlich werden, beispielsweise von der Leitstelle oder von einem weiteren externen Server, Umweltdaten, insbesondere Wetterdaten, dem Server SE zur Verfügung gestellt und als Faktor für die Berechnung des Grads verwendet. Der Faktor kann beispielsweise für hohe und niedrige Temperaturen höher ausfallen, als dieser für moderate Temperaturen ausfallen würde. Konkret wird der aktuelle Grad der Belastung für ein Feldgerät FG1, FG2, bzw. eine weitere Anlagenkomponente AK1, AK2, wie folgt berechnet:

$$GB_n = \sum_{i=1}^{m} a_{i,n} \cdot B_{i,n}$$

GB entspricht dabei dem Grad der Belastung für ein Feldgerät FG1, FG2, bzw. für eine Anlagenkomponente AK1, AK2. "N" entspricht der "Nummer" eines Feldgeräts, FG1, FG2 bzw. einer Anlagenkomponenten AK1, AK2. B entspricht der Belastung, welche in einem Zeitintervall i (definiert durch die Aktualisierung der Produktionsdaten) angefallen ist. "m" entspricht dem Zeitraum, in welchem die Berechnung durchgeführt wurde, bzw. die Anzahl der Zeitintervalle. "a" entspricht hierbei dem jeweiligen Faktor während eines Zeitintervalls, wobei die Umweltdaten zu den jeweiligen Zeitintervallen i korreliert werden.

Erreicht der Grad der Belastung eines der Feldgeräte, bzw. einer der weiteren Anlagenkomponenten, eine jeweils vorbestimmte Schwelle, so wird eine Wartungsnotifikation erstellt, welche an die Leitstelle LS übergeben wird, um das jeweilige Feldgerät FG1, FG2 bzw. die jeweilige weitere Anlagenkomponente AK1, AK2 dementsprechend zu prüfen und gegebenenfalls zu warten und/oder auszutauschen.

Ein konkretes Beispiel ist die Produktion von Säuren. Aus den Produktionsdaten "Menge" und "Konzentration" lässt sich ein integraler Korrosionsgrad bestimmen, der sich nachteilig auf die Funktion der Anlagenkomponenten AK1, AK2 auswirken kann.

Das in Fig. 1 gezeigte Ausführungsbeispiel ist rein beispielhaft zu verstehen. Neben den aufgeführten Beispielen für Feldgeräte FG1, FG2 und Anlagenkomponenten AK1, AK2 sind weitere Typen von Feldgeräten FG1, FG2 und Anlagenkomponenten AK1, AK2 in dem erfindungsgemäßen Verfahren einsetzbar.

**Bezugszeichenliste**

A          Anlage der Automatisierungstechnik
AK1, AK2   Anlagenkomponenten
FG1, FG2   Feldgeräte
GW         Gateway
KN         Kommunikationsnetzwerk
PD         Produktionsdaten
SE         Server
SPS        übergeordnete Einheit

**Patentansprüche**

1. Verfahren zur Überwachung einer Anlage (A) der Automatisierungstechnik, wobei in der Anlage (A) eine Vielzahl von Feldgeräten (FG1, FG2) und eine Vielzahl weiterer Anlagenkomponenten (AK1, AK2) eingebunden sind, wobei die Feldgeräte (FG1, FG2) Daten generieren, bei denen es sich insbesondere um Messdaten, Steuerdaten, Kalibrier-/Parametrierdaten, Diagnose-, Historien- und/oder Statusdaten handelt und wobei die Feldgeräte (FG1, FG2) untereinander und mit zumindest einer übergeordneten Einheit (SPS) mittels eines ersten Kommunikationsnetzwerks (KN) in Kommunikationsverbindung stehen, **gekennzeichnet durch**:

   - Kontinuierliches Erfassen von Produktionsdaten (PD) aus der Anlage (A), wobei die Produktionsdaten (PD) eine Menge an erzeugten Produkten korreliert über definierte Zeitintervalle darstellen;
   - Berechnen von individuellen Belastungsdaten für jede der Anlagenkomponenten (AK1, AK2) und jedes der Feldgeräte (FG1, FG2), wobei die Belastungsdaten einen Zuwachs eines Grads der Belastung für jede der Anlagenkomponenten (AK1, AK2) und jedes der Feldgeräte (FG1, FG2) pro erzeugtem Produkt darstellen;
   - Berechnen des Grads der Belastung für jede der Anlagenkomponenten (AK1, AK2) und für jedes der Feldgeräte (FG1, FG2) anhand der erfassten Produktionsdaten (PD) durch Aufsummieren der individuellen Belastungsdaten; und
   - Erstellen einer Warnungsnotifikation, im Falle, dass der berechnete Grad der Belastung eines Feldgeräts (FG1, FG2) oder einer Anlagenkomponente (AK1, AK2) eine für jede Anlagenkomponente (AK1, AK2) und jedes Feldgerät (FG1, FG2) individuell definierte Schwelle überschreitet.

2. Verfahren nach Anspruch 1, wobei zusätzlich Umweltdaten erfasst werden, insbesondere Wetterdaten, welche in die Berechnung der Belastungsdaten, bzw. in das Berechnen des Grads der Belastung für jede der Anlagenkomponenten (AK1, AK2) und für jedes der Feldgeräte (FG1, FG2) miteinfließen.

3. Verfahren nach Anspruch 1 oder 2, wobei die Schwellen für jede der Anlagenkomponenten (AK1, AK2) und für jedes der Feldgeräte (FG1, FG2) bei der Inbetriebnahme der jeweiligen Anlagenkomponente (AK1, AK2), bzw. des jeweiligen Feldgeräts (FG1, FG2), bestimmt werden.

4. Verfahren nach Anspruch 1 oder 2, wobei die Schwellen für jede der Anlagenkomponenten (AK1, AK2) und für jedes der Feldgeräte (FG1, FG2) durch einen Vergleich mit Anlagenkomponenten (AK1, AK2), bzw. Feldgeräten (FG1, FG2), in weiteren Anlagen ähnlichen Typs bestimmt werden.

5. Verfahren nach Anspruch 4, wobei die Schwellen kontinuierlich neu berechnet, bzw. aktualisiert werden.

6. Verfahren nach zumindest einen der vorherigen Ansprüche, wobei das Erfassen der Produktionsdaten (PD), das Berechnen der Belastungsdaten, das Berechnen des jeweiligen Grads der Belastung, das Erstellen der Wartungsnotifikation und/oder das Bestimmen, bzw. neu berechnen, bzw. Aktualisieren, der Schwellen von einem Server (SE), insbesondere von einer Anwendungsapplikation auf dem Server durchgeführt wird, welcher Server (SE) mit dem Kommunikationsnetzwerk (KN) der Anlage (A), insbesondere über das Internet, in Kommunikationsverbindung steht.

**Claims**

1. Method for monitoring an automation system (A), wherein a plurality of field devices (FG1, FG2) and a plurality of further system components (AK1, AK2) are integrated in the system (A), wherein the field devices (FG1, FG2) generate data, which is in particular measurement data, control data, calibration/parameterization data, diagnostic data, history data and/or status data, and wherein the field devices (FG1, FG2) communicate with each other and with at least one higher-level unit (PLC) by means of first and second higher-level units (PLC), control data, calibration/parameterization data, diagnostic data, history data and/or status data, and wherein the field devices (FG1, FG2) are in communication with each other and with at least one higher-level unit (PLC) by means of a first communication network (KN), **characterized by**:

   - Continuous recording of production data (PD) from the system (A), whereby the production data (PD) represents a correlated quantity of products produced over defined time intervals;
   - calculating individual load data for each of the system components (AK1, AK2) and each of the field devices (FG1, FG2), wherein the load data represents an increase in a degree of load for each of the system components (AK1, AK2) and each of the field devices (FG1, FG2) per product produced;

- Calculate the degree of stress for each of the system components (AK1, AK2) and for each of the field devices (FG1, FG2) based on the recorded production data (PD) by summing up the individual stress data; and

- Creation of a warning notification in the event that the calculated level of load on a field device (FG1, FG2) or a system component (AK1, AK2) exceeds a threshold defined individually for each system component (AK1, AK2) and each field device (FG1, FG2).

2. Method according to claim 1, wherein environmental data is additionally recorded, in particular weather data, which is included in the calculation of the load data or in the calculation of the degree of load for each of the system components (AK1, AK2) and for each of the field devices (FG1, FG2).

3. Method according to claim 1 or 2, wherein the thresholds are determined for each of the system components (AK1, AK2) and for each of the field devices (FG1, FG2) during commissioning of the respective system component (AK1, AK2) or the respective field device (FG1, FG2).

4. The method according to claim 1 or 2, wherein the thresholds for each of the system components (AK1, AK2) and for each of the field devices (FG1, FG2) are determined by a comparison with system components (AK1, AK2) or field devices (FG1, FG2) in other systems of similar type.

5. The method according to claim 4, wherein the thresholds are continuously recalculated or updated.

6. Method according to at least one of the previous claims, wherein the acquisition of the production data (PD), the calculation of the load data, the calculation of the respective degree of load, the creation of the maintenance notification and/or the determination or recalculation or updating of the thresholds is carried out by a server (SE), in particular by an application application on the server, which server (SE) is in communication connection with the communication network (KN) of the plant (A), in particular via the Internet.

**Revendications**

1. Procédé de surveillance d'un système d'automatisation (A), dans lequel plusieurs dispositifs de terrain (FG1, FG2) et plusieurs autres composants du système (AK1, AK2) sont intégrés dans le système (A), dans lequel les dispositifs de terrain (FG1, FG2) génèrent des données, qui sont en particulier des données de mesure, des données de commande, des données d'étalonnage/paramétrage, des données de diagnostic, des données d'historique et/ou des données d'état, et dans lequel les dispositifs de terrain (FG1, FG2) communiquent entre eux et avec au moins une unité de niveau supérieur (PLC) au moyen d'une première et d'une deuxième unités de niveau supérieur (PLC), des données de contrôle, des données d'étalonnage/paramétrage, des données de diagnostic, des données d'historique et/ou des données d'état, et dans lequel les dispositifs de terrain (FG1, FG2) sont en communication entre eux et avec au moins une unité de niveau supérieur (PLC) au moyen d'un premier réseau de communication (KN), **caractérisé par** :

- Enregistrement continu des données de production (PD) du système (A), les données de production (PD) représentant une quantité corrélée de produits fabriqués sur des intervalles de temps définis ;

- calculer les données de charge individuelles pour chacun des composants du système (AK1, AK2) et chacun des dispositifs de terrain (FG1, FG2), les données de charge représentant une augmentation du degré de charge pour chacun des composants du système (AK1, AK2) et chacun des dispositifs de terrain (FG1, FG2) par produit fabriqué ;

- Calculer le degré de contrainte pour chacun des composants du système (AK1, AK2) et pour chacun des dispositifs de terrain (FG1, FG2) sur la base des données de production enregistrées (PD) en additionnant les données de contrainte individuelles ; et

- Création d'une notification d'avertissement au cas où le niveau calculé de charge sur un dispositif de terrain (FG1, FG2) ou un composant du système (AK1, AK2) dépasse un seuil défini individuellement pour chaque composant du système (AK1, AK2) et chaque dispositif de terrain (FG1, FG2).

2. Méthode selon la revendication 1, dans laquelle des données environnementales sont enregistrées en plus, en particulier des données météorologiques, qui sont incluses dans le calcul des données de charge ou dans le calcul du degré de charge pour chacun des composants du système (AK1, AK2) et pour chacun des dispositifs de terrain (FG1, FG2).

3. Méthode selon la revendication 1 ou 2, dans laquelle les seuils sont déterminés pour chacun des composants du système (AK1, AK2) et pour chacun des dispositifs de terrain (FG1, FG2) pendant la mise en service du composant respectif du système (AK1, AK2) ou du dispositif de terrain respectif (FG1, FG2).

4. La méthode selon la revendication 1 ou 2, dans laquelle les seuils pour chacun des composants du système (AK1, AK2) et pour chacun des dispositifs de terrain (FG1, FG2) sont déterminés par une comparaison avec les composants du système (AK1, AK2) ou les dispositifs de terrain (FG1, FG2) dans d'autres systèmes de type similaire.

5. Méthode selon la revendication 4, dans laquelle les seuils sont recalculés ou mis à jour en permanence.

6. Procédé selon au moins l'une des revendications précédentes, dans lequel l'acquisition des données de production (PD), le calcul des données de charge, le calcul du degré de charge respectif, la création de la notification de maintenance et/ou la détermination ou le recalcul ou la mise à jour des seuils sont effectués par un serveur (SE), en particulier par une application sur le serveur, lequel serveur (SE) est en liaison de communication avec le réseau de communication (KN) de l'installation (A), en particulier par l'intermédiaire d'Internet.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2014212978 A1
- EP 0727656 A1
- US 2009319084 A1
- WO 2007038533 A2